# EUROPEAN PATENT SPECIFICATION

(11) **EP 3 819 264 B1**
(45) Date of publication and mention of the grant of the patent: **26.11.2025**
(21) Application number: 19737805.2
(22) Date of filing: 02.07.2019
(51) Int. Cl.: C02F 1/52, C02F 1/66, C02F 103/20

(54) **METHOD FOR THE TREATMENT OF LIQUID MANURE OR DIGESTATES, ESPECIALLY SUITABLE FOR THE TREATMENT OF SLURRY**
VERFAHREN ZUR BEHANDLUNG VON GÜLLE ODER GÄRRESTEN, INSBESONDERE ZUR BEHANDLUNG VON SCHLAMM
PROCÉDÉ POUR LE TRAITEMENT DE LISIER OU DE DIGESTATS, CONVENANT SPÉCIALEMENT AU TRAITEMENT DE PURINS

(30) Priority: 04.07.2018 ES 201830672
(43) Date of publication of application: 12.05.2021
(73) Proprietor: Rotecna, S.A., 25310 Agramunt (ES)
(72) Inventor: ROMEU GUARDIA, Gener, 25310 AGRAMUNT (ES)
(74) Representative: Sugrañes, S.L.P.
(86) International application number: PCT/ES2019/070465
(87) International publication number: WO 2020/008093

(56) References cited:
- WO-A1-2010/136046
- WO-A1-2012/109737
- WO-A1-2014/012865
- US-A1- 2006 108 291
- US-A1- 2009 281 312

## Description

### Technical field of the invention

The invention belongs to the field of treatment of farm manures and related waste, which pays special attention to how to prepare a liquid fraction of the same for reuse.

### Background of the invention

Liquid manures (slurry) refers to the liquid formed by animal urine and what leaks from manure. In livestock farms, for example, pig farms, in practice, slurry consists of the mixture of solid and liquid waste, that is to say, of faeces and urine, normally mixed with the water used for cleaning the barns.

Liquid manures have traditionally been used as fertilizer elements, being recycling to convert them into an organic fertilizer for cultivated land, with the consequent saving of chemical fertilizers and in costs.

Slurries have basic pHs which favours the emission of ammonia and other greenhouse gases into the atmosphere, due to the fact that uninterrupted product decomposition reactions take place in these mixing conditions.

When the ammonia dissolves in water, an amount of the same is converted into ammonium ions. The balance between ammonia and ammonium ions is expressed as follows: NH4+ +OH- = NH3 + H2O.

It is known that the degree to which the ammonium ion is converted into ammonia depends mainly on the pH of the solution and on the temperature. If the pH is low, more ammonia molecules are converted into ammonium ions (non-evaporative). If the pH is high, the hydroxide ion extracts a proton from the ammonium ion, generating ammonia (evaporative).

Taking advantage of this principle, different slurry treatment proposals that either favour the evaporation of ammonia for the recovery thereof, which is the case of the extraction and thermal dehydration processes of volatile organic matter and the nitrogenous ammonia compounds, or that try to keep it in the form of an ammonium ion, for example, the nitrification/denitrification biological processes that produce a biological sludge that contains most of the phosphates, are currently known. Nevertheless, the presence of solid components in the slurry and the necessary energy and space contribution for the implementation of some of these proposals mean that they are not efficient.

Among the methods that seek to avoid the evaporation of ammonia, for example, the one described in patent document ES 2147975 is known, which comprises subjecting the liquid fraction of a solid-liquid separation stage to a physical-chemical coagulation treatment using coagulants in the presence of an acid such that the treatment is carried out at the pH value of the optimum reaction medium. This optimum pH is not exemplified, although it is noted that the use of sulfuric acid has the advantages of modifying the balance of the ammonium salts towards the more chemically and thermally stable ammonium sulphate, such as ammonium carbonate (or ammonium bicarbonate); and that the sulphate element is agronomically evaluated in the recovered solid.

Optionally, this coagulation treatment may be followed by a flocculation treatment, in this case without controlling the pH value. A mineral coagulant is proposed as a coagulant, which can be chosen from the group consisting of ferrous chloride, ferric chloride, ferrous sulphate, ferric sulphate, ferric chlorosulphate, aluminium sulphates or basic aluminium chlorosulphates; or an organic agent, listing a neutral polyelectrolyte 0 as candidate, and very preferably, cationic. At least one anionic polyelectrolyte is preferably mentioned as the flocculant.

In document ES 2147975, the coagulation and flocculation treatment is carried out in different apparatuses, such that after the coagulation treatment in the coagulator apparatus the medium to be treated is led to the apparatus used for flocculation. The flocculant is injected into the stream of medium being treated between the two apparatuses.

Next, in a subsequent step carried out in another apparatus, a liquid/solid separation operation is carried out by a float or hydrocyclone (when treating animal excrements). The proposal is exemplified, by treating liquid pig excrements, with a float device from which a separate sludge is obtained with a 5.28% dry extract at 105°C.

A solution that is capable of extracting a separated sludge with a higher value of dry extract is of interest.

Likewise, in order to implement the proposal according to ES 2147975, a complex installation is required, equipped with pumping groups, hydraulic connections and a notable area of space. For example, it is estimated that to separate 2000 Kg/h in the separation stage with the float device, at a rate of 6.6 Kg/m²h (Metcalf Eddy) it would take 303m² of surface and provide ideal conditions of humidity.

Document US 2009/281312 A1 refers to a procedure for the treatment of purines comprising a first phase of electrolytic treatment of the mentioned liquid part in which the metallic nitrates are destroyed by oxidation-reduction and a second phase of physical-chemical treatment of purification and alteration of the properties of the liquid part, eliminating or reducing the pollutants and the CDO; and a third phase in which a substance is added for the use of the resulting product as a base in the manufacture of detergents, medicines and/or cosmetics.

Documents WO 2012/109737 A1 and WO 2014/012865 A1 refer to a process for treating digested matter supplied from an anaerobic digester and a biogas plant, respectively.

Document US 2006/108291 A1 discloses a method of treating manure such that odour from the manure is significantly reduced or eliminated and producing therefrom recyclable water, value-added biosolids and ammonia, the method having a first step promoting the evaporation of ammonia.

Document WO 2010/136046 A1 describes a system and method for separating slurry into a solid phase, a reject water with a low content of nitrogen and a nitrogen fraction. The system comprises a first separator for separating raw slurry into a first liquid phase and a first solid phase, first mixing means for mixing the first liquid phase with a base, a second separator for separating the first liquid phase mixed with the base into a second liquid phase and a second solid phase.

An object of the present invention is also a more compact and versatile solution, which can adapt to different livestock farms quickly and safely and requires less space than the known solutions.

The solution that is pursued can also not renounce other basic objectives, such as the suppression of odours, essentially caused by volatile organic materials and bound elements (such as H2S and NH3); and the removal of the phosphate from the recovered liquid fraction.

### Description of the invention

In order to solve the drawbacks described above, a compact reactor for the treatment of liquid manure or digestates is disclosed, which is especially suitable for the treatment of a liquid part of slurry, comprising a closed container with at least three chambers for subjecting the manure to three consecutive treatment stages, and in particular
- a first chamber with a receiving inlet for receiving the liquid manure to be treated, prepared to subject liquid manure to a chemical coagulation process under controlled conditions of the pH level between 5 and 6.5;
- a second chamber in communication with the first chamber, prepared to subject a coagulated overflow of the first chamber to a chemical flocculation process under controlled conditions of the pH level below 6.8; and
- a third chamber in communication with the second chamber and in which a compartment is formed for settling the flocs with suspended solids formed in the second chamber; and a sieve device, preferably curved with a horizontal triangular mesh, over which the content of the compartment for settling the flocs overflows for the separation thereof, the third chamber further comprising an outlet for the recovered liquid fraction (Lr) that passes through the sieve device and collecting means for collecting the recovered solid fraction (Sr) which slides through the sieve device, in the curved example with a horizontal triangular mesh, forming a characteristic solid of the system in the form of small cylinders, in connection with the outside of the container.

The reactor thus provides a compact solution that requires less space than conventional installations while being more versatile.

Note that the reactor is adapted to control the pH of the medium under treatment not only in the first but also in the second chamber, which enables an excess dosage of flocculant to be avoided, as is the case in the known methods that do not implement any control in this regard, as is the case with the method described in ES 2147975. Indeed, if after the coagulation there is no pH control, the natural tendency of the flocculant is to raise the pH a little, thus being able to exceed the pH value of 7, which favours, in an unwanted way, the generation of evaporative ammonia. In order for good control of the pH, the second chamber also enables the adjustment of the necessary dose of flocculant and knowing with certainty the pH of the medium at the outlet, both of the solid part and the liquid part.

The arrangement in chambers, which are hydraulically connected, and the natural overflow passage between the first and the second chamber prevents the medium from being subjected to overpressures that may impair the stability of the flocs, as is the case when having different apparatuses to subject the medium to a coagulation treatment and to a flocculation treatment, which entails the use of pumping groups for the transfer of the medium between the different apparatuses.

The first chamber is equipped with at least first stirring means; an upper outlet, intended to enable the evacuation of gases; a first pH probe; and first dosing means for the combined or separate dosing of a coagulant, an acidifier and an anti-foaming agent in the quantity and proportions required to maintain the pH level between 5 and 6.5.

Preferably, the coagulant comprises at least one of aluminium polyhydroxychlorosulphate (PACS) or aluminium hydroxychloride (PACI).

The second chamber is equipped with at least second stirring means; a second pH probe; and second dosing means for the dosing of flocculant in the quantity and proportions required to maintain the pH level below 6.8.

Preferably, the flocculant is a solid mixture of cationic flocculant, with a medium or high cationicity and high molecular weight with a smaller part of an organic acid.

As explained later, the first and second dosing means for the dosing of coagulant and flocculant, respectively, as well as the acidifier and the anti-foaming agent can comprise continuous or interval dosing pumps, according to an associated control unit depending on the instantaneous pH values of the medium measured in said first and second chambers and the target pH value for each chamber.

According to one embodiment, the volume ratio V1 of the first chamber and V2 of the second chamber fulfils the ratio V1<V2; and the first and second stirring means comprising first and second propeller stirrers or blades with a vertical axis, the ratio of the rotation speeds R1 of the first propeller stirrer or blades and R2 of the second propeller stirrer or blades fulfils the ratio R1>R2. In practice, the stirring in the first chamber will be faster than that of the second chamber.

In a variant of interest, which helps to make the reactor compact, the third chamber is equipped with an overflow device, with communication between the compartment to settle the flocs and the sieve device, which is adjustable in height in order to be able to control the level of the free surface of the medium under treatment in the first, second and third chambers due to the effect of communicating vessels.

The surfaces of the container in contact with the liquid manure under treatment can be made of polypropylene.

Optionally, the container may comprise two adjoining chambers for preparing in situ the flocculant to be used in the second chamber.

According to another aspect, an installation for the treatment of slurry is disclosed, comprising a solid-liquid separator to obtain a solid fraction and a liquid fraction of the slurry; and a reactor according to the invention, the receiving inlet of which is connected to the separator for feeding the liquid fraction of the slurry to the reactor, the separator being optionally arranged above the reactor.

According to the invention, a method for the treatment of slurry is disclosed comprising the steps of a) mechanically separating a liquid fraction (L) from a solid fraction (S) of the slurry, obtaining a solid fraction (S) with 15-30% dryness; and b) subjecting the obtained liquid fraction to a physical-chemical process in an essentially closed and sequential environment, firstly a coagulation process, then a flocculation process and finally a filtering process taking the appropriate measures so that the liquid and solid parts remain at all times in acid form in order to, among other factors, favour the presence of ammonium ion and prevent ammonia emissions.

The disclosed reactor is especially suitable for carrying out said step b).

Step b) comprises the operations of b1) subjecting the obtained liquid fraction to a chemical coagulation process under vigourous stirring and controlled conditions of the pH level between 5 and 6.5; b2) subjecting the coagulate resulting from operation b1) to a chemical flocculation process under moderate stirring and controlled conditions of the pH level below 6.8; and b3) settling the flocs with suspended solids obtained from operation b2) and pouring them, by overflow, into a sieve device, preferably of the curved type, thus obtaining a recovered liquid fraction (Lr) that passes through the sieve device and a recovered solid fraction (Sr) that slides through the sieve device.

Preferably, the solid fraction (Sr) recovered in operation b3) is dried in drying basins and then mixed with the solid fraction (S) of the slurry obtained in operation a), obtaining a final solid that is capable of being dried, intended for composting or to be used as fertilizer.

According to a preferred embodiment of the method, in operation b1) the pH value of the material or medium in the coagulation process is monitored and a coagulant is dosed combined or separately, an acidifier and an anti-foaming agent in the quantity and proportions required to maintain the pH level between 5 and 6.5.

Likewise, also preferably in operation b2), the pH value of the material or medium in the flocculation process is monitored and a flocculant which is a solid mixture of cationic flocculant is dosed, with a medium or high cationicity and high molecular weight with a smaller part of an organic acid.

### Brief description of the drawings

Fig. 1 schematically shows an installation for the implementation of the method according to the invention;
Figs. 2 and 3 show the compact reactor for the physical-chemical treatment of the liquid fraction of the slurry of the installation of Fig. 1, according to a side and cross-sectional view according to a longitudinal cutting plane, respectively.

### Detailed description of the invention

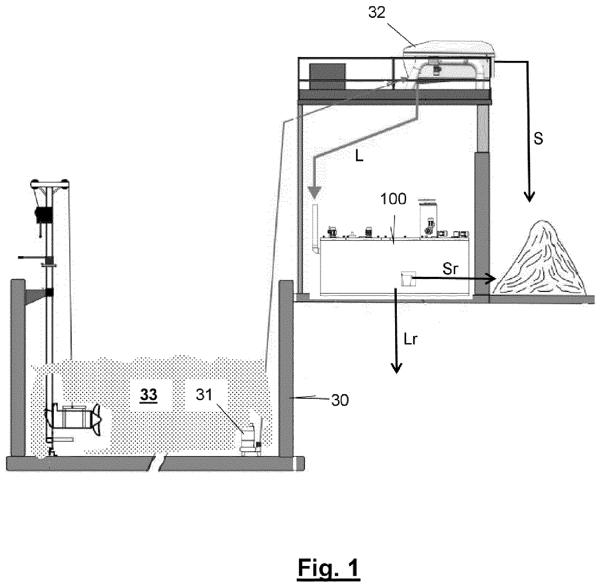

Fig. 1 schematically shows an installation exemplifying the invention. The parts of the same are not represented to scale and the purpose of the diagram is only to provide the reader with the explanations that follow.

Having said that, the installation of Fig. 1 comprises a basin 30 of farm slurry 33, preferably of the stirred type, from which and conventionally by means of a pumping group 31, the slurry to be treated is driven to a solid/liquid separator 32. This separator 32 can be, for example, a TECNAPUR^{®} model TP-01 separator, with a treatment flow of 5m³/h.

The obtained solid (S), with approximately 25% dryness, can be used to throw onto the land, can be composted or can be used for other uses, in the present example prior to mixing with a recovered solid (Sr) obtained at a later stage, as explained later.

The characteristics of the slurry at the inlet and outlet of this separator 32 are shown in Table 1.

**Table 1: Example and characterisation of the solid-liquid separation stage with TECNAPUR model TP-01 separator.**

| | Gross Slurry 100% | Liquid fraction | | Solid fraction | |
|---|---|---|---|---|---|
| | Inlet Kilos (Kg) | Output Kilos (Kg) | % Raw slurry | Inlet Kilos (Kg) | % Raw slurry |
| **Total mass** | 4980 | 4108 | 82.5 | 872 | 17.5 |
| Dry material (Total Solids) | 514 | 302 | 58.8 | 212 | 41.2 |
| Ammonia nitrogen | 22.3 | 17.2 | 76.9 | 5.2 | 23.1 |
| Organic nitrogen | 9.3 | 7.9 | 85.1 | 1.4 | 14.9 |
| Total Nitrogen | 31.6 | 25.0 | 79.3 | 6.5 | 20.7 |
| Phosphorus (P2O5) | 23.6 | 18.5 | 78.3 | 5.1 | 21.7 |
| Potassium (K2O) | 23.9 | 18.5 | 77.3 | 5.4 | 22.7 |

The resulting liquid fraction (L) (comprising 58.8% of dry matter of the initial slurry) is led directly and without deposits to a compact reactor 100, the details of which will be explained below, and a recovered liquid fraction (Lr) and the recovered solid fraction (Sr) mentioned above will be obtained from this liquid fraction (L).

In the exemplary installation, 4.108 tonnes of the liquid fraction (L) obtained from the separator 32 were treated in the reactor 100, with 7.36% dry matter, from which 2.96 tonnes of recovered liquid fraction (Lr) with 1.7% dry matter (corresponds to dissolved solids) and 6.5 pH units; and 1.23 tonnes of recovered solid fraction (Sr) with 20.4% dry matter and with 6.5 pH units were obtained.

The characteristics of the liquid fraction (L) at the inlet of the reactor 100 and of the recovered liquid and solid fractions (Lr) and (Sr), respectively, at the outlet of this reactor 100 are shown in Table 2.

**Table 2: Example and characterisation of the stage in the compact reactor.**

| | Liquid slurry | Liquid fraction | | Solid fraction | |
|---|---|---|---|---|---|
| | Inlet Kilos (Kg) | Output Kilos (Kg) | % Raw slurry | Inlet Kilos (Kg) | % Raw slurry |
| **Total mass** | **4108** | **2500** | 50.2 | **1608** | 32.3 |
| Dry material (Total Solids) | **302** | **50** | 9.7 | **252.3** | 49.1 |
| Ammonia nitrogen | **17.2** | **6.4** | 28.7 | **10.8** | 48.2 |
| Organic nitrogen | **7.9** | **0.8** | 8.4 | **7.1** | 76.8 |
| **Total Nitrogen** | **25.0** | **7.2** | 22.7 | **17.9** | 56.6 |
| **Phosphorus (P₂O₅)** | **18.5** | **0.3** | 1.7 | **18.2** | 76.8 |
| **Potassium (K₂O)** | **18.5** | **7.5** | 31.4 | **11.0** | 46.0 |

In the conditions of outlet pH, ammonia is 99.99% non-evaporative and atmospheric emissions of greenhouse gases (GHG) CH4, N2O, CO2, NOx, and the smells are eliminated, in addition to reaching a very significant reduction of nitrogen and phosphorus of the liquid part.

As has been put forward before, in the exemplary installation, the recovered solid fraction (Sr) is mixed with the solid fraction (S) of the first solid/liquid separation stage. The final balance of slurry is summarised in Table 3.

**Table 3: Final overall result of the treatment.**

| | Effectiveness of the SEPARATION (% Elements in the solid fraction.) | Effectiveness of the SEPARATION (% Elements in the liquid fraction.) | (% possible variation depending on type of slurry and others) |
|---|---|---|---|
| **Total mass** | **49.8%** | **50.2%** | **(+/- 10)** |
| Dry material (Total Solids) | **90.3%** | **9.7 %** | **(+5/-10)** |
| Ammonia nitrogen | **71.3%** | **28.7 %** | **(+10/- 15)** |
| Organic nitrogen | **91.6%** | **8.4%** | **(+5/- 10)** |
| **Total Nitrogen** | **77.3%** | **22.7 %** | **(+10/- 15)** |
| **Phosphorus (P₂O₅)** | **98.5%** | **1.5 %** | **(+/-1)** |
| **Potassium (K₂O)** | **68.6%** | **31.4%** | **(+/- 10)** |

The contribution of the reactor 100 to achieve this balance is significant. In the reactor 100, the liquid fraction (L) obtained in the solid/liquid separator 32 is subjected to a physical-chemical process in an essentially closed and sequential environment, firstly a coagulation process, then a flocculation process and finally a filtering process taking the appropriate measures so that the liquid and solid parts remain at all times in acid form in order to, among other factors, favour the presence of ammonium ion and prevent ammonia emissions.

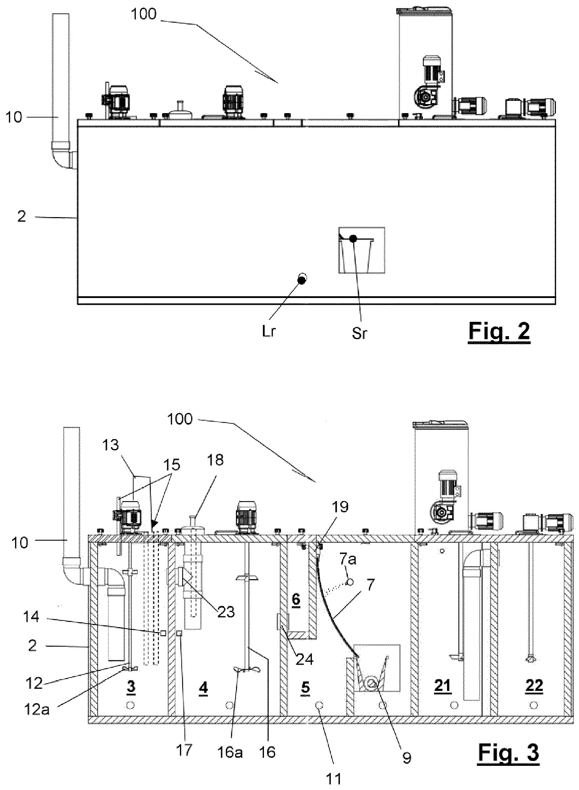

This reactor 100, illustrated in Figs. 2 and 3, comprises a container 2 constructed of materials resistant to the chemical reactions that occur inside the same. In the example, the reactor 100 is made of double-walled polypropylene and stainless steel AISI 316.

It is characteristic of the reactor 100 that the container 2 has internal divisions, that is, it is compartmentalised, three chambers being determined to subject the liquid fraction (L) coming from the solid/liquid separator 32 to the three consecutive treatment stages. These three chambers are the following:
- a first chamber 3, which has a receiving inlet 10 for receiving the liquid fraction (L) to be treated, and that is prepared to subject it to a chemical coagulation process under controlled conditions of the pH level between 5 and 6.5;
- a second chamber 4, in hydraulic communication with the first chamber 3, prepared to subject a coagulated overflow of the first chamber 3 to a chemical flocculation process under controlled conditions of the pH level below 6.8; and
- a third chamber 5, in hydraulic communication with the second chamber 4 and in which an interior compartment is formed to settle 6 the flocs with suspended solids leaving the second chamber 4; and that is equipped with a sieve device 7, in the example of the preferably curved type, into which the contents of the compartment overflow to settle 6 the flocs, the third chamber 5 further comprising an outlet 11 for the recovered liquid fraction (Lr) 8 that passes through the sieve device 7 and collecting means 9 for collecting the recovered solid fraction (Sr) which slides through the sieve device 7 in connection with the outside of the container 2. The sieve device 7, which can have a triangular rod, has an automatic cleaning system, which is not shown, and leads the flocs without destroying them to said collecting means 9 which may comprise a screw or auger conveyor.

The method that is carried out in the installation is as follows:
The liquid fraction (L) of the slurry to be treated is obtained by means of the solid/liquid separator 32. Said separator 32 is arranged superposed to the reactor 100, being able to feed said liquid fraction (L) to the reactor 100 by means of gravity, entering the first chamber 3 through the receiving inlet 10, the discharge mouth of which is immersed in the medium under treatment.

This first chamber 3 is equipped with first stirring means 12 with a set of blades 12a and with first dosing means 15 for the combined or separate dosing of a coagulant, an acidifier and an anti-foaming agent in the quantity and proportions required to maintain the pH level of the medium between 5 and 6.5. Although the container 2 is essentially a closed container and the medium under treatment is not in contact with the atmosphere, the first chamber 3 has an upper outlet 13 intended to enable the evacuation of gases.

The arrangement of these first dosing means 15 is schematic in Fig. 3. The dosage by means of separate conduits or injectors is of interest, as well as being able to locate the supply point in an area near the mouth of the receiving inlet.

The first chamber 3 has a first pH probe 14 that is capable of monitoring the pH of the medium under treatment, continuously or at intervals. The pH value is sent to a control unit, which is not shown, that seeks the combined or separate dosing of the coagulant, the acidifier and the anti-foaming agent in the quantities and proportions required to maintain said pH level between 5 and 6.5. In practice, the control unit will regulate the operation of both impeller pumps for these products.

In the example, the coagulant comprises at least one of aluminium polyhydroxychlorosulphate (PACS) or aluminium hydroxychloride (PACI). These coagulants have different solid bases in the hydrolytic reactions with respect to the conventional coagulants and in practice it has been revealed that the PAC flocs unpredictably tend to be groups of small spheres and chain type structures with a size less than 25 mm, while the flocs obtained with conventional coagulants, of the aluminium sulphate type, are usually spongy and porous structures with a size of 25 to 100 mm. This difference causes the PACs to produce a lower turbidity in suspension than aluminium sulphate.

Advantageously, since PACs are more efficient than aluminium sulphate, given their greater ability to remove suspended solids, a lower dose is required: depending on the type of slurry, it can substitute 1.5 to 2.0 parts of grade A aluminium sulphate and 3.5 to 3.9 parts of grade B aluminium sulphate.

For the case of aluminium hydroxychloride, Al2(OH)5Cl2.5H2O, this is an inorganic salt of multinuclear aluminium (PAC) that is capable of forming, more quickly and perfectly, flocs with higher sedimentation speed and clarifying power, achieving higher turbidity removals compared to other mononuclear aluminium salts such as aluminium sulphate.

Aluminium hydroxychloride is commercially available as a slightly viscous light amber liquid, sometimes opalescent and having an astringent sweet flavour. It has the advantage that it is easy to handle and dose without leaving undesirable insoluble residues, unlike conventional granulated coagulants that must be dissolved and in many cases leave residues that damage the dosing equipment.

In short and with respect to conventional coagulants, aluminium hydroxychloride improves the rate of floc formation; enables a higher sedimentation rate, protects dosing equipment; and requires shorter mixing times for coagulation.

In addition to the above, aluminium hydroxychloride tends to quickly acidify the medium depending on the dose, which results in this method of interest when the pH of the medium is to be maintained in acid values.

The acidifier can be selected from sulphuric or hydrochloric acid.

All this leads to the conditions in the chamber 3 being optimal for producing an exothermic reaction with rupture processes due to destabilisation processes, molecular breakdown of complexes forming small clots, with immediate elimination of microorganisms and pathogens, precipitation and capture of phosphorus and metals, odour reduction, immediate transformation of ammonia into ammonium and reduction of CH4 emissions, favouring the formation of ammonium sulphate and the agglutination of subsequent organic matter.

The first chamber 3 of the reactor 100 is hydraulically connected to the second chamber 4 by means of a sewage pipe 23 arranged in the upper portion of the first chamber 3 but preferably at a level below the free surface of the medium in the first chamber 4.

In the example, the sewage pipe 23 is bent and opens into the second chamber 4 at an intermediate level. The sewage pipe 23 can have a vertical branch that communicates with the outside of the container 2.

The second chamber 4 is equipped with second stirring means 16 with a set of blades 16a and with second dosing means 18 for dosing the flocculant in the quantity and proportions required to maintain the pH level below 6.8. In the example, the supply of flocculant is carried out inside the vertical branch of the sewage pipe 23 with the supply point being located at or below the horizontal section of the sewage pipe 23.

The second chamber 4 has a second pH probe 17 that is capable of monitoring the pH of the medium under treatment, continuously or at intervals. The pH value is sent to the aforementioned control unit, or to another associated control unit, which ensures the dosage of the flocculant in the quantity required to maintain said pH level below 6.8. In practice, this control unit will regulate the operation of an impeller pump for the flocculant product.

In the example, the flocculant is a solid mixture of cationic flocculant, with a medium or high cationicity and high molecular weight with a smaller part of an organic acid. Table 4 characterises flocculants with these characteristics.

**Table 4: Optimal flocculants for the implementation of the invention.**

| Appearance | Bulk density | Viscosity 0.3% | Cationicity | Molecular Weight |
|---|---|---|---|---|
| White granular solid | ~ 0.80 g/cm3 | 250-350 cp | High | Very high |
| White granular solid | ~ 0.80 g/cm3 | 300-450 cp | Average | Very high |

Commercial products that meet these characteristics usually incorporate between 2.5% muramic acid, 2.5% adipic acid, or different mixtures of acetic acid, citric acid. The invention consequently envisages the use, in combination with the selected flocculant, less than 10% in proportion of an acid, as an organic acid buffer.

In the example, the capacity of the first chamber 3 is 600 l and the capacity of the second chamber 4 is 800 I.

In the example, the stirring carried out in the first chamber 3 is fast stirring and the stirring carried out in the second chamber 4 is slow stirring. In the reactor 100, the speed of rotation of the vanes 12a and 16a can be regulated to control the speed of rotation at optimum values. In the context of the present invention, fast stirring is considered to be that which is obtained at speeds of between 700 and 1500 rpm; and slow stirring to be that which is obtained at speeds of rotation below 300 rpm.

This leads to the conditions in the second chamber 4 being optimal for forming very large and heavy flocs containing all suspended solids.

Said second chamber 4 is in hydraulic communication with a third chamber 5 by means of a passage 24 arranged at an intermediate level which opens into a compartment for settling 6 the flocs formed in the third chamber 5 and equipped with an overflow device 19 through which the flocs are poured onto the sieve device 7. The overflow device 19 is preferably adjustable in height in order to control the level of the free surface of the medium under treatment in the first, second and third chambers 3, 4 and 5 due to the effect of communicating vessels.

The compartment to settle 6 the flocs, or plenum chamber, is a small volume and is not stirred, contributing to a better grouping and compaction of the flocs before the separation that takes place in the sieve device 7.

The flocs are poured naturally and continuously onto the sieve device 7 and separated by rolling the solid towards the lower portion of the sieve device 7, which contributes to drying the same in the path without destroying it. The solid that reaches the lower portion of the sieve device will constitute the recovered solid fraction (Sr) that is continuously removed by the collecting means 9 at a maximum of 2000 kg/h.

The liquid part that passes through the sieve device 7 will constitute the recovered liquid fraction (Lr) and is devoid of suspended solids, having colour reduction to a light orange shade. This recovered liquid fraction (Lr) is continuously extracted from the reactor 100 and can be subjected to subsequent treatments and/or sent to a basin.

The reactor 100 is preferably equipped with an automatic cleaning system 7a of the sieve device 7. This automatic cleaning system 7a (illustrated schematically in Fig. 3) can consist of a series of nozzles suitable for projecting jets of liquid onto the sieve device 7.

In the present example, the energy consumption associated with the pumping group 31, the separator 32 and the physical-chemical system inside the reactor 100 is less than 5 KW/h for a maximum flow of 15 m³/hour, which represents significant energy savings in comparison to other well-known methods, especially with respect to those that use the electrocoagulation technique or that use centrifugation devices.

The reactor 100 that exemplifies the invention comprises first and second contiguous added chambers 21 and 22, to continuously produce in situ the flocculant used in the flocculation stage that is carried out in the second chamber 4.

The first added chamber 21 incorporates thereon a receiving hopper with a capacity of about 60 litres, wherein the cationic flocculant in powder form of the type parameterised in Table 4 is added.

This powdered flocculant is dosed with a heated auger conveyor actuated by a gear motor with speed regulation capability, in order to control the quantity of powdered flocculant that is to be supplied to the first added chamber 21.

In the same first camera added 21, in the example of a capacity of about 600 litres, water is supplied from the network, at a controlled rate of approximately 1200 litres/hour with a rotameter, and it is mixed with the powdered flocculant by stirring the medium by means of a blade stirrer rotating at a rate of about 200 rpm. The stirred medium passes through communicating vessels into the second added chamber 22 and is also subjected to stirring, where the mixture has just matured to be dosed into the second chamber 4.

By controlling the quantities of powder and water it is possible to achieve the optimum concentration of flocculant. In the example, concentrations of 0.05 to 0.1% have been satisfactory.

As an alternative, the use of a pulse counter flow meter before the inlet of the rotameter is also envisaged so that it is possible to dose an emulsion flocculant (a highly concentrated liquid mixture, but more expensive in economic terms) instead of powder. In this case, the pulse counter would be connected to a pulse pump for dosing the emulsion flocculant to be introduced into the first added chamber 21 from a receptacle or container.

## Claims

1. A method for the treatment of the liquid formed by animal urine and what leaks from manure, comprising the steps of
a) mechanically separating a liquid fraction (L) from a solid fraction (S) of slurry, obtaining a solid fraction (Se) with 15-30% dryness; and
b) subjecting the obtained liquid fraction (L) to a physical-chemical process in an reactor (100) with at least three chambers for subjecting the manure to three respective and consecutive treatment stages, firstly a coagulation process, then a flocculation process and finally a filtering process, taking the appropriate measures so that the separated liquid and solid parts remain at all times in acid form in order to, among other factors, favour the presence of ammonium ion and prevent ammonia emissions, wherein
step b) comprises the operations of
b1) in a first chamber (3) subjecting the obtained liquid fraction to a chemical coagulation process under vigourous stirring and controlled conditions of the pH level between 5 and 6.5;
b2) in a second chamber (4) in communication with the first chamber, subjecting the coagulate resulting from operation b1) to a chemical flocculation process under moderate stirring and controlled conditions of the pH level below 6.8;
b3) in a third chamber in communication with the second chamber (4), settling the flocs with suspended solids obtained from operation b2) and pouring them, by overflow, into a sieve device (7), preferably of the curved type, thus obtaining a recovered liquid fraction (Lr) (8) that passes through the sieve device (7) and a recovered solid fraction (Sr) that slides through the sieve device (7).

2. The method according to the preceding claim, **characterised in that** the solid fraction (Sr) recovered in operation b3) is mixed with the solid fraction (S) of the slurry obtained in operation a), obtaining a final solid that is capable of being dried, intended for composting or to be used as fertilizer.

3. The method according to any one of claims 1 or 2, **characterised in that** in operation b1) the pH value of the material or medium in the coagulation process is monitored and a coagulant is dosed combined or separately, an acidifier and an anti-foaming agent in the quantity and proportions required to maintain the pH level between 5 and 6.5.

4. The method according to the preceding claim, **characterised in that** the coagulant comprises at least one of aluminium polyhydroxychlorosulphate (PACS) or aluminium hydroxychloride (PACI) and one of sulphuric acid or hydrochloric acid.

5. The method according to any one of claims 1 to 4, **characterised in that** in operation b2), the pH value of the material or medium in the flocculation process is monitored and a flocculant which is a solid mixture of cationic flocculant is dosed, with a medium or high cationicity and high molecular weight with a smaller part of an organic acid.

## Patentansprüche

1. Verfahren zur Behandlung von Flüssigkeit gebildet aus tierischem Urin und was aus Mist aussickert, umfassend die folgenden Schritte
a) das mechanische Trennen einer flüssigen Fraktion (L) von einer festen Fraktion (S) aus Schlamms, unter Erhaltung einer festen Fraktion (Se) mit 15-30 % Trockenheit; und
b) das Aussetzen der erhaltenen flüssigen Fraktion (L) einem physikalischen-chemischen Prozess in einem Reaktor (100) mit mindestens drei Kammern, um den Mist drei jeweiligen und aufeinanderfolgenden Behandlungsstufen auszusetzen, zunächst einem Koagulationsprozess, dann einem Flockungsprozess und schließlich einem Filterungsprozess, wobei die angemessenen Maßnahmen getroffen werden, sodass die getrennten flüssigen und festen Teile jederzeit in Säureform bleiben, um, unter anderen Faktoren, die Anwesenheit von Ammoniumion zu begünstigen und Ammoniakemissionen vorzubeugen, wobei
Schritt b) die folgenden Vorgänge umfasst
b1) in einer ersten Kammer (3), das Aussetzen der erhaltenen flüssigen Fraktion einem chemischen Koagulationsprozess unter starkem Rühren und kontrollierten Bedingungen des pH-Niveaus zwischen 5 und 6,5;
b2) in einer zweiten Kammer (4) in Verbindung mit der ersten Kammer, das Aussetzen des Koagulats, welches sich aus Vorgang b1) ergibt, einem chemischen Flockungsprozess unter mäßigem Rühren und kontrollierten Bedingungen des pH-Niveaus unter 6,8;
b3) in einer dritten Kammer in Verbindung mit der zweiten Kammer (4), das Absetzen der Flocken mit suspendierten Feststoffen erhalten aus Vorgang b2) und das Gießen derselben, mittels Überlauf, in eine Siebvorrichtung (7), vorzugsweise des gekrümmten Typs, wodurch eine zurückgewonnene flüssige Fraktion (Lr) (8) erhalten wird, welche durch die Siebvorrichtung (7) durchgeht und eine zurückgewonnene feste Fraktion (Sr), welche durch die Siebvorrichtung (7) gleitet.

2. Verfahren gemäß dem vorhergehenden Anspruch, **dadurch gekennzeichnet, dass** die feste Fraktion (Sr) zurückgewonnen in Vorgang b3) mit der festen Fraktion (S) des Schlamms erhalten in Vorgang a) gemischt wird, unter Erhalt eines endgültigen Feststoffes, welcher in der Lage ist, getrocknet zu werden, welcher dafür vorgesehen ist, kompostiert zu werden oder als Düngemittel verwendet zu werden.

3. Verfahren gemäß einem der vorhergehenden Ansprüche 1 oder 2, **dadurch gekennzeichnet, dass** in Vorgang b1) der pH-Wert des Materials oder Mediums im Koagulationsprozess überwacht wird und ein Koagulationsmittel, kombiniert oder separat, ein Säuerungsmittel und ein Antischaummittel in der Menge und den Anteilen, welche benötigt werden, um das pH-Niveau zwischen 5 und 6,5 aufrechtzuerhalten, dosiert wird.

4. Verfahren gemäß dem vorhergehenden Anspruch, **dadurch gekennzeichnet, dass** das Koagulationsmittel mindestens eins aus Aluminium-Polyhydroxychlorsulfat (PACS) oder Aluminium-Hydroxychlorid (PACI) und eins aus Schwefelsäure oder Salzsäure umfasst.

5. Verfahren gemäß einem der vorhergehenden Ansprüche 1 bis 4, **dadurch gekennzeichnet, dass** in Vorgang b2) der pH-Wert des Materials oder Mediums im Flockungsprozess überwacht wird und ein Flockungsmittel, welches eine feste Mischung aus kationischem Flockungsmittel ist, mit einer mittleren oder hohen Kationizität und hohem Molekulargewicht, mit einem kleinerem Teil einer organischen Säure dosiert wird.

## Revendications

1. Procédé pour le traitement du liquide formé par l'urine animale et qui fuit du lisier, comprenant les étapes consistant à
a) séparer mécaniquement une fraction liquide (L) d'une fraction solide (S) de purins, en obtenant une fraction solide (Se) à 15-30 % de siccité; et
b) soumettre la fraction liquide (L) obtenue à un procédé physico-chimique dans un réacteur (100) avec au moins trois chambres pour soumettre le lisier à trois étapes de traitement respectives et consécutives, premièrement un procédé de coagulation, ensuite un procédé de floculation et finalement un procédé de filtrage, prenant les mesures appropriées de telle sorte que les parties liquide et solide séparées restent à tout moment sous forme acide afin, entre autres facteurs, de favoriser la présence d'ion ammonium et d'empêcher les émissions d'ammoniac, dans lequel
l'étape b) comprend les opérations consistant à
b1) dans une première chambre (3), soumettre la fraction liquide obtenue à un procédé de coagulation chimique sous agitation vigoureuse et dans des conditions contrôlées du niveau de pH entre 5 et 6,5;
b2) dans une deuxième chambre (4) en communication avec la première chambre, soumettre le coagulé résultant de l'opération b1) à un procédé de floculation chimique sous agitation modérée et dans des conditions contrôlées du niveau de pH inférieur à 6,8;
b3) dans une troisième chambre en communication avec la deuxième chambre (4), déposer des flocules avec des solides en suspension obtenus à partir de l'opération b2) et les verser, par débordement, dans un dispositif de tamisage (7), de préférence du type incurvé, en obtenant ainsi une fraction liquide récupérée (Lr) (8) qui passe à travers le dispositif de tamisage (7) et une fraction solide récupérée (Sr) qui glisse sur le dispositif de tamisage (7).

2. Procédé selon la revendication précédente, **caractérisé en ce que** la fraction solide (Sr) récupérée dans l'opération b3) est mélangé avec la fraction solide (S) des purins obtenus dans l'opération a), en obtenant un solide final qui peut être séché, destiné au compostage ou à être utilisé comme engrais.

3. Procédé selon l'une quelconque des revendications 1 ou 2, **caractérisé en ce que**, dans l'opération b1), la valeur de pH du matériau ou du milieu dans le procédé de coagulation est surveillée et on dose en combinaison ou séparément un coagulant, un acidifiant et un agent anti-mousse dans la quantité et les proportions requises pour maintenir le niveau de pH entre 5 et 6,5.

4. Procédé selon la revendication précédente, **caractérisé en ce que** le coagulant comprend au moins l'un du polyhydroxychlorosulfate d'aluminium (PACS) ou l'hydroxychlorure d'aluminium (PACI) et l'un de l'acide sulfurique ou l'acide chlorhydrique.

5. Procédé selon l'une quelconque des revendications 1 à 4, **caractérisé en ce que**, dans l'opération b2), la valeur de pH du matériau ou du milieu dans le procédé de floculation est surveillée et on dose un floculant qui est un mélange solide de floculant cationique, avec une cationicité moyenne ou élevée et un poids moléculaire élevé avec une partie plus petite d'un acide organique.
